Europäisches Patentamt

European Patent Office

Office européen des brevets

(19)

(11) Publication number: **0 027 307**
**B1**

(12) **EUROPEAN PATENT SPECIFICATION**

(45) Date of publication of patent specification: **08.06.83**

(51) Int. Cl.³: **B 60 N 1/04**

(21) Application number: **80302806.7**

(22) Date of filing: **14.08.80**

(54) Vehicle seats.

(30) Priority: **15.10.79 GB 7935713**

(43) Date of publication of application:
**22.04.81 Bulletin 81/16**

(45) Publication of the grant of the patent:
**08.06.83 Bulletin 83/23**

(84) Designated Contracting States:
**DE FR IT**

(56) References cited:
**GB - A - 194 376**
**GB - A - 1 087 670**
**GB - A - 1 157 694**
**GB - A - 1 177 789**
**GB - A - 1 286 439**
**US - A - 2 057 591**

(73) Proprietor: **TALBOT MOTOR COMPANY LIMITED**
**Administrative Centre P.O. Box 122A Abbey Road**
**Whitley, Coventry, CV34GB (GB)**

(72) Inventor: **Ludford; Peter**
**27 Guthlaxton Avenue**
**Lutterworth Leicestershire LE17 4ET (GB)**

(74) Representative: **Bayliss, Geoffrey Cyril et al,**
**BOULT, WADE & TENNANT 27 Furnival Street**
**London EC4A 1PQ (GB)**

Courier Press, Leamington Spa, England

# Vehicle seats

This invention relates to vehicle seats.

GB—A—1,177,789 discloses an adjustable seat for a car in which two rear supports for the seat are displaceable on horizontal rails to which they are adapted to be secured in any one of a number of predetermined positions, and the front edge of the seat cushion frame rests on a front support mounted pivotably on the vehicle floor. The effective length of the front support is adapted for variation independently of any adjustment of the rear supports and the seat cushion frame is detachable from the front support to enable the seat to be tipped upwardly and rearwardly to provide access to the space beneath the seat. The range of fore and aft adjustment of the seat is limited to that required for different drivers to accommodate themselves but no provision is made for increasing the forward movement of the seat to provide improved access for a rear seat passenger. The object of the applicant's invention is to provide an additional forward movement of a vehicle seat over and above the regular fore and aft adjustment normally provided to increase the space behind the seat for access to a rear seat of the vehicle.

The invention provides a vehicle seat having a mounting/adjustment mechanism comprising, adjacent the front of the seat, link means pivotally connected at one end to the seat above an axis extending transversely of the seat and having at the other end a pivotal connection for attachment to link mountings, and, at the other end of the seat, guide means, first slideway means for mounting on the vehicle floor to extend fore and aft of the seat, intermediate slideway means slidably mounted on the first slideway means and supporting the seat guide means for movement fore and aft to the vehicle seat, and locking means for locking the guide means to the intermediate slideway means and the intermediate slideway means to the first slideway means respectively, one of the slideway means providing a normal range of adjustment of the seat and the other slideway means permitting the seat to be moved forward beyond the normal range of adjustment until the link means supporting the forward end of the seat extend generally horizontally forwardly of the link mountings thus tilting the forward end of the seat downwardly and, the seat back by a corresponding amount forwardly.

In one construction according to the invention the link means may have pivotal connections for mounting on the vehicle forwardly of said slideway means, one of the slideway means providing a normal range of adjustment of the seat over which the link means move in a generally vertical arc.

In a further construction the link means may have pivotal mountings attached to the intermediate slideway means, adjustment of the intermediate slideway means with respect to the first slideway means providing normal adjustment of the seat and adjustment of the guide means with respect to the intermediate slideway means providing said forward movement beyond the normal range of adjustment to a position in which the link means lie generally horizontally forwardly of the link mountings on the intermediate slideway means to tilt the forward end of the seat forwardly and downwardly and to tilt the back of the seat by a corresponding amount forwardly.

The following is a description of a specific embodiment of the invention, reference being made to the accompanying drawings in which:

Figure 1 is a diagrammatic side view of a vehicle showing a front seat for the vehicle driver in a normal position;

Figure 2 is a similar view to Figure 1 showing the seat tilted forwardly and downwardly for access to a rear seat of the vehicle;

Figure 3 is a view of a lower rearward mounting of the seat looking in the direction of the arrow 1 on Figure 1; and

Figures 4 and 5 are similar views to Figures 1 and 2 showing an alternative seat mounting arrangement.

The drawings show part of a two door motor vehicle 10 including a driver's doorway 11, driver's seat 12, steering wheel 13, door pillar 14 and rear seat 15.

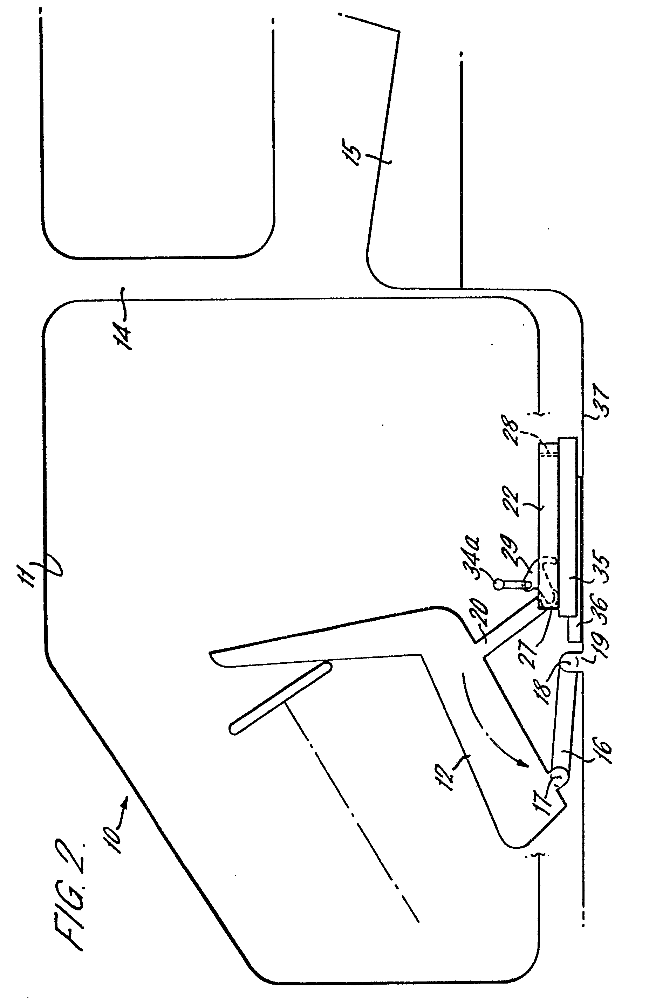

The normal range of adjustment of the driver's seat 12 and the corresponding passenger seat on the other side of the vehicle is indicated by the full line and chain dotted line positions and the seat can also be moved further forward and tilted until, in the case of the driver's seat, the back and the seat comes up against the steering wheel as shown in Figure 2. The arrangement thus provides greater access for passengers to the rear seat of the vehicle from either side of the vehicle. The arrangement for supporting the seat to move as shown will now be described.

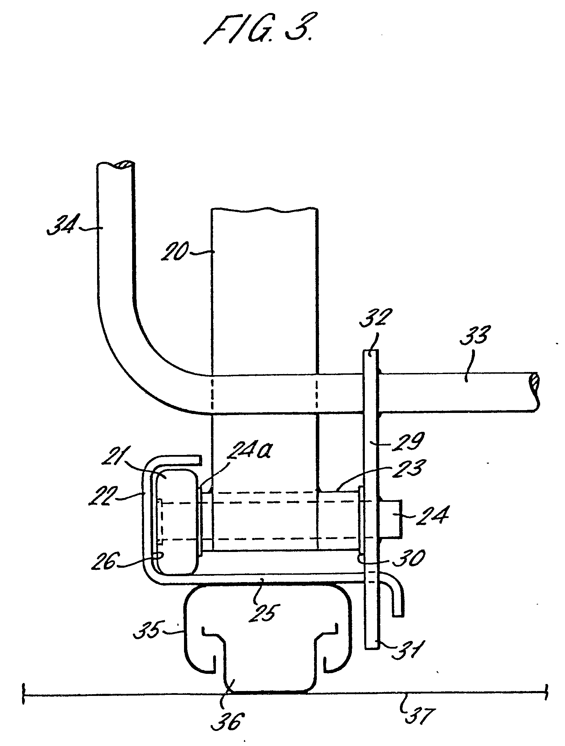

Adjacent the front end of the seat, two links 16 are pivotally mounted at spaced locations across the seat pivoted about an axis extending transversely of the seat on pivots 17. The links extend generally downwardly from the front end of the seat in the normal position of the seat and the lower ends of the links are pivotally connected at 18 on fixed brackets 19 mounted on the vehicle floor. Two rigid legs 20 extend downwardly from the rearward end of the seat at locations spaced across the seat, the lower end of each leg carrying a roller 21 which engages in a slideway 22 as shown in greater detail in Figure 3 of the drawings to which reference will now be made.

The lower end of each leg 20 has a transversely extending tube 23 secured to it by welding in which a spindle 24 is rotatably mounted. The end of the spindle 24 projecting from the tube on the outer side of the seat carries the roller 21 which is free to rotate on the spindle. A washer 24a is disposed between the roller and the adjacent end of the sleeve 23. The intermediate slideway 22 in which the roller 21 engages comprises a base member 25 extending fore and aft with respect to the seat and having an upstanding flange along one end thereof which is bent over at the top to form a fore and aft extending laterally open channel 26 in which the roller 21 is constrained to move. The channel 26 is closed at its forward end by an end plate 27 and adjacent its rearward end by an end plate 28 to limit the movement of the roller and thereby the leg 20 of the seat along the channel.

The end of the spindle 24 projecting from the inner side of the sleeve carries a latch 29 attached by welding to the spindle and washer 30 is disposed between the latch and the adjacent end of the tube 23 to provide free rotation of the latch with respect to the sleeve. The latch has a downwardly extending latching arm 31 for engaging around the rearward end of the base 25 of the slideway to lock the roller 21 against the rearward end plate 28 and thereby fix the seat at the rearward limit of its travel along the slideway 22. The latch 29 also has an upwardly projecting lug 32 and the lugs 32 of the latches on either side of the seat are connected together by a bar 33 which is welded to the lugs. One end 34 of the bar 33 is extended outwardly of the seat and has an up-turned arm having a knob 34a at its upper end to provide a handle for pivoting the latches 29 to release them from locking engagement with the rearward ends of the slideways 22. A return spring or springs (not shown) is/are provided for biasing the latches in a locking direction.

The base member 25 of the slideway 22 on each side of the seat is rigidly mounted on the slide 35 of a conventional seat slide mechanism having a slideway 36 mounted on the vehicle floor 37. A conventional detent mechanism (not shown) is provided for locking the upper member 35 in one of a plurality of positions of adjustment of the slide along the slideway, the locking mechanism having a release lever common to both mechanisms which project below the forward end of the seat for release by the seat occupant when adjustment is required.

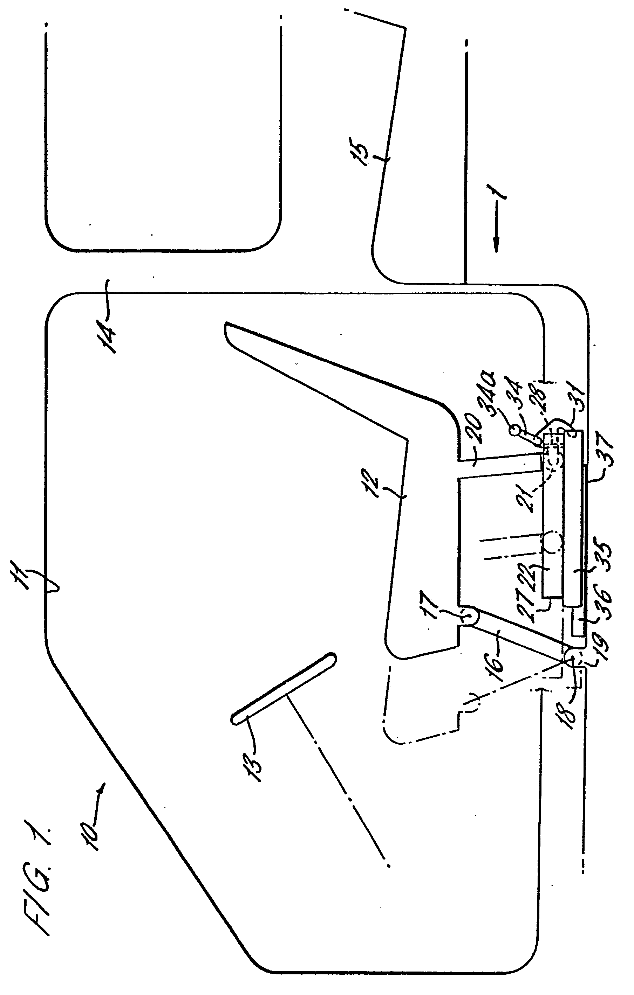

The fore and aft movement of the seat provided by movement of the slide 35 along the slideway 36 provides the normal seat adjustment referred to above as illustrated in Figure 1. When the latches 29 are released by the arm 34, the roller 21 is free to move along the slideway 22 until it reaches the forward end plate 27 of the slideway and this provides the additional forward movement of the seat referred to above in which the seat moves forwardly and is tilted downwardly at its forward end thereby tilting the back of the seat forwardly against the steering wheel as shown in Figure 2 of the drawings to provide increased access space to the rear seat of the vehicle.

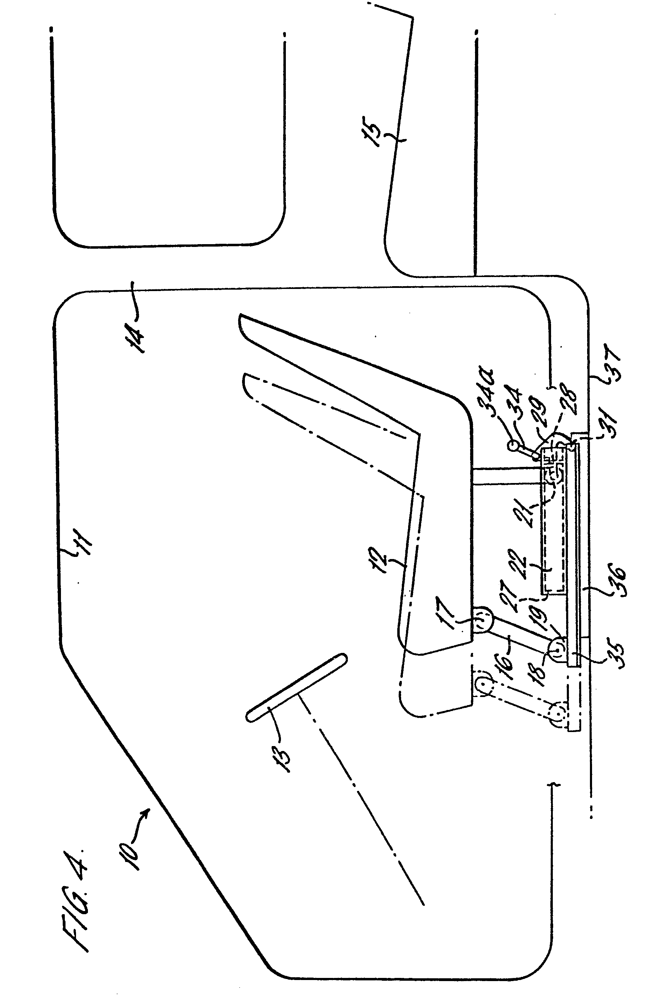

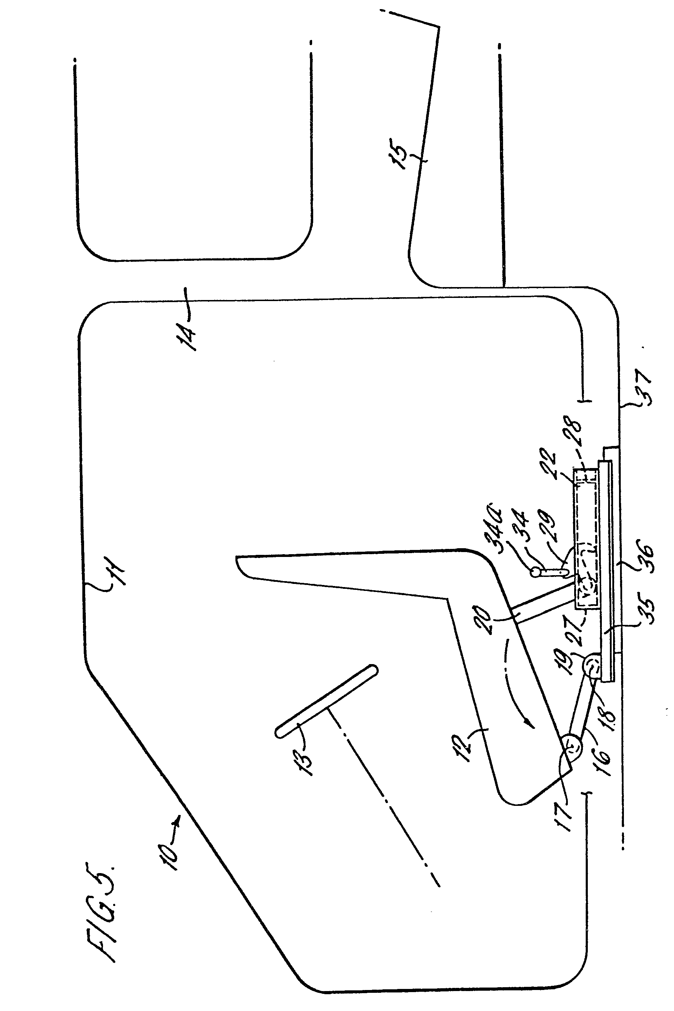

Reference is now made to the modified seat mounting arrangement illustrated in Figures 4 and 5. The arrangement is generally similar to that of Figures 1—3, and, for the sake of convenience, like parts have been allotted the same reference numerals. The arrangement of Figures .4 and 5 differs in that the slides 35 are somewhat longer to extend just in front of the forward end of the seat 12 when the seat is in the normal position and the brackets 19 to receive the pivotal mountings 18 of the links 16 are mounted on the forward extensions of the slides 35. Thus when the locking mechanism for the slide 35 are released, the seat may be adjusted bodily fore and aft with respect to the slideways 36 through the range of adjustment indicated by the full-line and chain-line positions in Figure 4 without any accompanying pivotal movement of the link 16. When it is desired to give the seat additional forward movement to provide a temporary improved access to the rear seat, the latches 29 are released from the end plates of the slideways 22 and the seat can then be moved forwardly, the links 16 pivoting about the brackets 19 and the rollers 27 running along the slideways 22 in a similar manner to that described in the first embodiment. The seat eventually reaches the forwardmost position indicated in Figure 5 in which the links 16 extend almost horizontally forwardly from the brackets 19 so that the front end of the seat has been moved both forwardly and downwardly and the back of the seat has been correspondingly moved and tilted forwardly to increase the space between the seat back and the rear door pillar 14 to increase the axis space to the rear seat.

## Claims

1. A vehicle seat having a mounting/adjustment mechanism comprising, adjacent the front of the seat (12), link means (16) pivotally connected at one end to the seat about an axis (17) extending transversely of the seat and having, at the other end, a pivotal connection (18) for attachment to link mounting means (19), and, at the rear end of the seat, guide means/slideway means (22, 25, 35, 36) for defining a limited fore and aft movement of the seat, and locking means (31) to lock the guide means (21) to the slideway means (22, 25, 35, 36) in a required position of adjustment, characterised in that intermediate slideway means (22, 35) are slidably mounted on main slideway means (36) and the guide means (21) are supported for movement fore and aft along the intermediate slideway means (22, 35), and locking means are provided for locking the guide means to the intermediate slideway means (22) and the intermediate slideway means to the main slideway means respectively, one of the slideway means (36) providing a normal range of fore and aft adjustment of the seat and the other slideway means (22, 35) permitting the seat to be moved forward beyond the normal range of adjustment until the link means (16) supporting the forward end of the seat (12) extend generally horizontally forward of the link mounting means (19) thus tilting the forward end of the seat downwardly and forwardly and the seat back upwardly and forwardly by a corresponding amount.

2. A vehicle seat as claimed in Claim 1 characterised in that the link means (16) have pivotal connections (18) for mounting on the vehicle forwardly of said slideway means (22, 35), either one of the slideway means providing a normal range of adjustment of the seat over which the link means (16) move in a generally vertical arc.

3. A vehicle seat as claimed in Claim 1 characterised in that the link means (16) have pivotal mountings (19) attached to the intermediate slideway means (22, 35), adjustment of the intermediate slideway means (22, 35) with respect to the main slideway means (36) providing normal adjustment of the seat and adjustment of the guide means (21) with respect to the intermediate slideway means (22, 35) providing said forward movement beyond the normal range of adjustment to a position in which the link means (16) lie generally horizontally forwardly of the link mountings (19) on the intermediate slideway means (22, 35) to tilt the forward end of the seat (12) forwardly and downwardly and to tilt the back of the seat by a corresponding amount upwardly and forwardly.

4. A vehicle seat as claimed in any of the preceding claims characterised in that the movement of the intermediate slideway means (22, 35) along the main slideway means (36) provides the normal range of adjustment of the seat and the movement of the guide means (21) along the intermediate slideway means (22, 35) provides a further forward movement of the seat.

5. A vehicle seat as claimed in Claim 4 characterised in that locking means are provided for locking the intermediate slideway means (22, 35) to the main slideway means (36) in any one of a number of positions along the main slideway means to enable the seat (10) to be fixed in a number of positions through the normal range of adjustment of the seat.

6. A vehicle seat as claimed in Claim 4 or Claim 5 wherein stop means (27, 28) are provided on the intermediate slideway means (22, 35) for limiting the range of movement of the guide means (21) along the intermediate slideway means and further locking means (29) are provided for locking the guide means (21) at the rearward end (28) of its travel.

7. A vehicle seat as claimed in any of Claims 1 to 6 characterised in that the guide means on the seat (12) comprise rollers (21) mounted for rotation on the seat and engaging tracks (26) formed in the intermediate slideways (22, 35).

8. A vehicle seat as claimed in Claim 7 or Claim 8 characterised in that locking devices (29) are mounted on the seat frame (20) adjacent the two guides (21) and a common operating mechanism (33, 34) is provided for operating the locking devices.

**Revendications**

1. Siège de véhicule ayant un mécanisme d'ajustement/montage comprenant, à proximité de l'avant du siège (12), des moyens formant tringles (16) connectés pivotants, à une extrémité, au siège autour d'un axe (17) qui s'étend transversalement au siège et ayant, à l'autre extrémité, une connexion pivotante (18) pour fixation à un moyen (19) de montage de la tringle, et, à l'extrémité arrière du siège, des moyens de guidage/moyens formant glissières (22, 25, 35, 36) pour définir un mouvement limité, d'avant en arrière, du siège, et un moyen de blocage (31) pour bloquer les moyens de guidage (21) sur les moyens formant glissières (22, 25, 35, 36) dans une position requise d'ajustement, caractérisé en ce que les moyens formant glissières intermédiaires (22, 35) sont montés coulissants sur un moyen formant glissière principale (36) et les moyens de guidage (21) sont supportés pour un mouvement d'avant en arrière le long du moyen formant glissière intermédiaire (22, 35), et des moyens de blocage sont prévus pour bloquer les moyens de guidage sur le moyen formant glissière intermédiaire (22) et le moyen formant glissière intermédiaire sur le moyen formant glissière (36) principale, respectivement, l'un des moyens formant glissière permettant une plage normale d'ajustement d'avant en arrière du siège et l'autre moyen formant glissière (22, 35) permettant au siège d'être déplacé vers l'avant au-delà de la plage normale d'ajustement jusqu'à ce que le moyen formant tringle (16) supportant l'extrémité avant du siège (12) s'étende généralement horizontalement vers l'avant du moyen de montage (19) de la tringle pour faire ainsi basculer l'extrémité avant du siège, vers le bas, et vers l'avant et le dossier du siège vers le haut et vers l'avant d'une quantité correspondante.

2. Siège de véhicule selon la revendication 1 caractérisé en ce que les moyens formant tringles (16) ont des connexions pivotantes (18) pour montage sur le véhicule vers l'avant desdits moyens formant glissières (22, 35), chacun desdits moyens formant glissières permettant une plage normale d'ajustement du siège où les moyens formant charnières (16) se déplacent suivant un arc généralement vertical.

3. Siège de véhicule selon la revendication 1, caractérisé en ce que lesdits moyens formant tringles (16) ont des montages pivotants (19) fixés au moyen formant glissière intermédiaire (22, 35), l'ajustement du moyen formane glissière intermédiaire par rapport au moyen formant glissière principale permettant un ajustement normal du siège et un ajustement du moyen de guidage (21) par rapport au moyen formant glissière intermédiaire (22, 35) permettant ledit mouvement vers l'avant au-delà de la plage normale d'ajustement à une position où les moyens formant tringles (16) se trouvent généralement horizontalement vers l'avant des montages (19) des tringles sur le moyen formant glissière intermédiaire (22, 35) pour faire basculer l'extrémité avant du siège (12) vers l'avant et vers le bas et pour faire basculer le dossier du siège d'une quantité correspondante vers le haut et vers l'avant.

4. Siège de véhicule selon l'une quelconque des revendications précédentes caractérisé en ce que le mouvement du moyen formant glissière intermédiaire (22, 35) le long du moyen formant glissière principale (36) donne la plage normale d'ajustement du siège et le mouvement du moyen de guidage (21) le long du moyen formant glissière intermédiaire (22, 35) donne un plus ample mouvement du siège vers l'avant.

5. Siège de véhicule selon la revendication 4, caractérisé en ce que des moyens de blocage sont prévus pour bloquer le moyen formant glissière intermédiaire (22, 35) au moyen formant glissière principale (36) à l'une des nombreuse positions le long du moyen formant glissière principale pour permettre au siège (10) d'être fixé à un certain nombre de positions sur la plage normale d'ajustment du siège.

6. Siège de véhicule selon la revendication 4 ou la revendication 5, où des moyens d'arrêt (27, 28) sont prévus sur le moyen formant glissière intermédiaire (22, 35) pour limiter la plage de mouvement du moyen de guidage (21) le long du moyen formant glissière intermédiaire et d'autres moyens de blocage (29) sont prévus pour bloquer le moyen de guidage (21) à l'extrémité arrière (28) de sa course.

7. Siège de véhicule selon l'une quelconque des revendication 1 à 6, caractérisé en ce que les moyens de guidage sur le siège (12) comprennent des galets (21) montés pour une rotation sur le siège et engageant des voies (26) formées dans les glissières intermédiaires (22, 35).

8. Siège de véhicule selon la revendication 7 ou la revendication 8, caractérisé en ce que les dispositifs de blocage (29) sont montés sur l'ossature du siège (20) à proximité des deux guidages (21) et un mécanisme commun de manoeuvre (33, 34) et prévu pour manoeuvrer les dispositifs de blocage.

## Patentansprüche

1. Fahrzeugsitz mit einem Befestigungs- und Einstellmechanismus, bestehend aus einem Gestänge (16) nahe dem vorderen Ende des Sitzes (12), das mit dem einen Ende des Sitzes an einer Achse (17) angelenkt ist, die sich quer zum Sitz erstreckt, und das am anderen Ende eine Schwenkverbindung (18) zur Verbindung mit einer Halterung (19) aufweist, Führungs- und Verschiebeeinrichtungen (21, 22, 25, 35, 36) zum begrenzten Vor- und Zurückschieben des Sitzes, und einer Arretiereinrichtung (31) zum Arretieren der Führungseinrichtung (21) an der Verschiebeeinrichtung (22, 25, 35, 36) in einer bestimmten Einstellage, dadurch gekennzeichnet, daß Zwischenverschiebeeinrichtungen (22, 35) an der Hauptverschiebeeinrichtung (36) gleitend gelagert sind, daß die Führungseinrichtung (21) längs der Zwischenverschiebeeinrichtungen (22, 35) vor- und zurückschiebbar gelagert ist, und daß Arretiereinrichtungen vorgesehen sind, um die Führungseinrichtung an den Zwischenverschiebeeinrichtungen (22, 35) und die Zwischenverschiebeeinrichtungen an der Hauptverschiebeeinrichtung zu arretieren, wobei eine (36) der Verschiebeeinrichtungen eine Vor- und Rückstellung des Sitzes über einen normalen Bereich ermöglicht, und die anderen Verschiebeeinrichtungen (22, 35) das Vorschieben des Sitzes über den normalen Einstellbereich hinaus ermöglichen, bis das Gestänge (16), das das vordere Ende des Sitzes (12) trägt, sich horizontal über seine Halterung (19) hinaus erstreckt, so daß das vordere Ende des Sitzes nach vorne und unten gekippt und die Sitzrückenlehne um einen entsprechenden Betrag nach oben und vorne geschwenkt ist.

2. Fahrzeugsitz nach Anspruch 1, dadurch gekennzeichnet, daß das Gestänge (16) Schwenkverbindungen (18) zur Befestigung des Fahrzeugsitzes vor den Zwischenverschiebeeinrichtungen (22, 35) aufweist, wobei eine der Verschiebeeinrichtungen einen normalen Einstellbereich des Sitzes ermöglicht, in dem das Gestänge sich etwa auf einem vertikalen Bogen bewegt.

3. Fahrzeugsitz nach Anspruch 1, dadurch gekennzeichnet, daß das Gestänge (16) Schwenkverbindungen (19) aufweist, die an den Zwischenverschiebeeinrichtungen (22, 35) befestigt sind, wobei die Einstellung der Zwischenverschiebeeinrichtungen (22, 35) bezüglich der Hauptverschiebeeinrichtung (36) eine normale Einstellung des Sitzes und die Einstellung der Führungseinrichtung (21) bezüglich der Zwischenverschiebeeinrichtungen (21, 35) die Vorwärtsbewegung über den normalen Einstellbereich hinaus in eine Lage bewirkt, in der das Gestänge (16) etwa horizontal vor seiner Halterung (19) an den Zwischenverschiebeeinrichtungen (22, 35) liegt, um das vordere Ende des Sitzes (12) nach vorne und unten, die Rückenlehne des Sitzes um einen entsprechenden Betrag nach oben und vorne zu kippen.

4. Fahrzeugsitz nach einem der Ansprüche 1 bis 3, dadurch gekennzeichnet, daß die Bewegung der Zwischenverschiebeeinrichtungen (22, 35) längs der Hauptverschiebeeinrichtung (36) den normalen Einstellbereich des Sitzes und die Bewegung der Führungseinrichtung (21) längs der Zwischenverschiebeeinrichtungen (22, 35) eine weitere Vorwärtsbewegung des Sitzes bewirkt.

5. Fahrzeugsitz nach Anspruch 4, dadurch gekennzeichnet, daß Arretiereinrichtungen zum Arretieren der Zwischenverschiebeeinrichtungen (22, 35) an der Hauptverschiebeeinrichtung (36) in mehreren Lagen längs der Hauptverschiebeeinrichtung vorgesehen sind, damit der Sitz in mehreren Lagen über den normalen Einstellbereich des Sitzes feststellbar ist.

6. Fahrzeugsitz nach Anspruch 4 oder 5, gekennzeichnet durch Anschläge (27, 28) an den Zwischenverschiebeeinrichtungen (22, 35) zur Begrenzung des Bewegungsbereichs der Führungseinrichtung (21) längs der Zwischenverschiebeeinrichtungen, und weitere Arretiereinrichtungen (29) zum Arretieren der Führungseinrichtung (21) am hinteren Ende (28) ihrer Bewegungsbahn.

7. Fahrzeugsitz nach einem der Ansprüche 1 bis 6, dadurch gekennzeichnet, daß die Führungseinrichtung am Sitz (12) aus Rollen (21) besteht, die am Sitz befestigt sind und in Schienen (26) eingreifen, die an den Zwischenverschiebeeinrichtungen (22, 35) ausgebildet sind.

8. Fahrzeugsitz nach Anspruch 7 oder 8, dadurch gekennzeichnet, daß die weiteren Arretiereinrichtungen (29) am Sitzrahmen (20) nahe den beiden Führungseinrichtungen (21) angeordnet sind, und daß ein gemeinsamer Betätigungsmechanismus (33, 34) zur Betätigung der Arretiereinrichtungen vorgesehen ist.

FIG. 1.

0 027 307

FIG. 2.

0 027 307

# FIG. 3.

FIG. 4.

10  11  14  15  13  12  17  16  18  19  21  22  27  28  29  34  34a  31  37  35  36

FIG.5.

0027 307